# EUROPEAN PATENT SPECIFICATION

(11) **EP 1 095 687 B1**
(45) Date of publication and mention of the grant of the patent: **22.11.2006**
(21) Application number: 00309560.1
(22) Date of filing: 30.10.2000
(51) Int. Cl.: B01D 21/18

(54) **Sludge raker**
Schlammräumer
Racleur de boue

(30) Priority: 01.11.1999 JP 31091899
(43) Date of publication of application: 02.05.2001
(73) Proprietor: Hitachi Plant Technologies, Ltd., Chiyoda-ku Tokyo 101-0047 (JP)
(72) Inventor: Hirai, Atsuo, Amagasaki-Shi, Hyougo 661-8501 (JP); Morisawa, Takuya, Amagasaki-Shi, Hyougo 661-8501 (JP); Yamagata, Tetsuo, Amagasaki-Shi, Hyougo 661-8501 (JP); Iinuma, Hajime, Amagasaki-Shi, Hyougo 661-8501 (JP)
(74) Representative: Marles, Alan David

(56) References cited:
- EP-A- 0 532 484
- PATENT ABSTRACTS OF JAPAN vol. 5, no. 67, 7 May 1981 (1981-05-07) & JP 56 017609 A (HITACHI PLANT ENG&CONSTR CO), 19 February 1981 (1981-02-19)
- PATENT ABSTRACTS OF JAPAN vol. 5, no. 35, 5 March 1981 (1981-03-05) & JP 55 159814 A (HITACHI PLANT ENG & CONSTR CO), 12 December 1980 (1980-12-12)
- PATENT ABSTRACTS OF JAPAN vol. 1999, no. 10, 31 August 1999 (1999-08-31) & JP 11 137912 A (ASAHI TEC CORP), 25 May 1999 (1999-05-25)
- PATENT ABSTRACTS OF JAPAN vol. 1997, no. 1, 31 January 1997 (1997-01-31) & JP 08 243308 A (NGK INSULATORS), 24 September 1996 (1996-09-24)

## Description

### BACKGROUND OF THE INVENTION

The present invention concerns a sludge raker, more specifically a sludge raker realized in a way to improve durability and energy efficiency of the system by reducing sliding wear of the scraper which rakes sludge by moving along the bed of the basin.

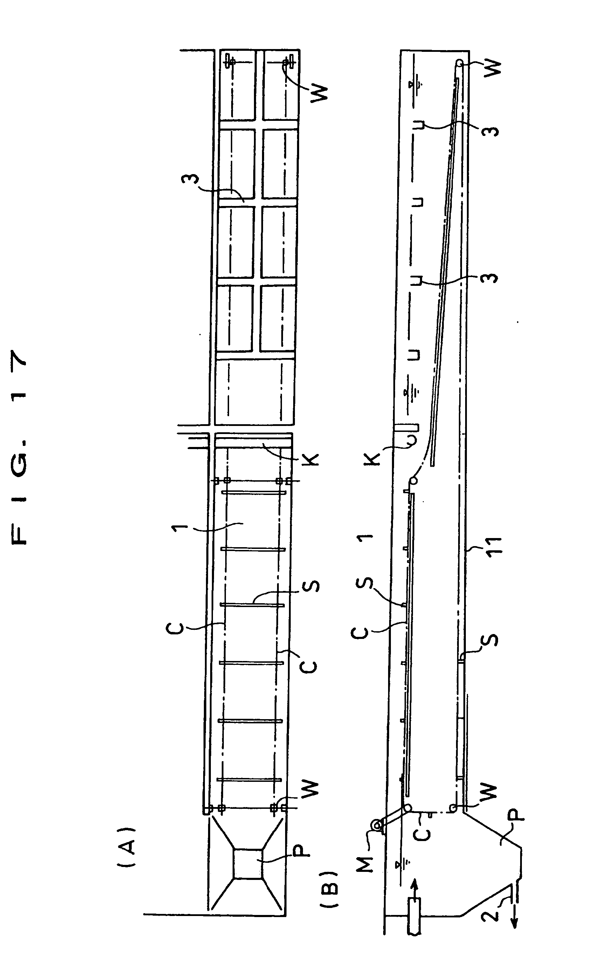

Conventionally, a sludge raker (including sedimentary sand raker intended for sedimentary sand, and simply referred to as "sludge raker" in this specification) is generally constructed by stretching, in a sewage treating basin 1 provided on one side with a sludge pit P for raking and temporarily storing sedimentary sludge, an endless chain C moving along the bed of the basin 11 and the surface of the water, and mounting scrapers S at prescribed intervals on this chain C, as shown in Fig. 17, in a way to cyclically drive the chain by driving a motor M so as to rake the sludge precipitated at the bed of the basin by means of the scrapers S located at the position in sliding contact with the bed of the basin on the outgoing side and collect it into the sludge pit P and, at the same time, rake the scam floating on the surface of the water by means of the scrapers S located at the water surface position on the incoming side and discharge it through the scam gap K.

The sludge collected into the sludge pit P is drawn to the outside of the sewage treating basin 1 by means of a sludge drawing pipe 2, to be discharged.

By the way, a problem in the conventional type of sludge raker, constructed in a way to stretch an endless chain C in the sludge and cyclically drive the chain C so as to rake sedimentary sludge by means of scrapers S located at a position in sliding contact with the bed of the basin on the outgoing side, was that the drive unit such as chain C and sprocket wheel W for stretching the chain C, etc. are inevitably positioned in the sewaged and that, because of contact with waste water mixed with sludge, the drive unit has a low durability of equipment due to wear or corrosion, requiring a lot of time and cost for the maintenance of the drive unit such as chain C and sprocket wheel W, etc.

Moreover, another problem was that, because the scraper S moves in sliding contact with the bed of the basin, the durability of the scraper is reduced with violent wear and the loss of power also increases.

### SUMMARY OF THE INVENTION

The objective of the present invention, realized in view of said problems of conventional types of sludge rakers, is to provide a sludge raker constructed in a way to protect the drive unit against wear or corrosion due to contact with waste water mixed with sludge, by eliminating the drive unit positioned in sewage, reduce wear to the scraper by moving the separator out of contact with the bed of the basin at the time of retreat, therefore not raking any sludge, and be capable of improving the durability and energy efficiency of the equipment by reducing power loss.

Said objective by achieved by the sludge raker according to claim 1.

This sludge raker can prevent wear and corrosion of the drive unit due to contact with waste water mixed with sludge, etc. and improve the durability of the system, by eliminating the drive unit positioned in waste water by installing a driving device on the surface of the water.

Moreover, by being constructed in such a way that said driving device is installed on the surface of the water and, when the sludge raker moves forward in the sludge raking direction, by means of said driving device, the scraper mounted on the beam of the sludge raking device moves along the bed of the basin and, when the sludge raker moves in the opposite direction, at least the scraper mounted on the rear part of the beam of the sludge raking device moves without coming in contact with the bed of the basin, this sludge raker can make the reciprocating movement of the front part of the beam of the sludge raking device, on which is accumulated a large volume of sedimentary sludge raked by the sludge raking device, smoothly, and thus perform the raking of sedimentary sludge accurately and stably.

Furthermore, by forming at least the scraper mounted on the rear part of the beam of the sludge raking device in different shapes on the front and the back faces, so as to rake sludge when it moves forward in the sludge raking direction and to dive into the sedimentary sludge when retreating in the opposite direction, this sludge raker can rake sedimentary sludge by simply alternately moving the rear part of the beam of the sludge raking device disposed along the bed of the sewage treating basin.

In this case, the sludge raker may be constructed in such a way that the scraper mounted on the front part of the beam of the sludge raking device moves in contact with the bed of the basin when it moves forward in the sludge raking direction. This makes it possible to accurately rake sludge precipitated on the bed of the basin.

Moreover, the sludge raker may be constructed in such a way that the scraper mounted on the front part of the beam of the sludge raking device moves without coming in contact with the bed of the basin when it moves forward in the sludge raking direction. This makes it possible to make the smooth alternating movement of the front part of the beam of the sludge raking device even when a large volume of sludge is precipitated on the bed of the basin, reducing wear and power loss to the scraper.

Moreover, the rear part of the beam of the sludge raking device may be suspended in a swingable way and supported in a way to follow the drive of the front part of the beam. This makes it possible to make the smooth alternating movement of the rear part of the beam of the sludge raking device even when a large volume of sludge is precipitated on the bed of the basin, reducing wear and power loss to the scraper.

Moreover, the rear part of the beam of the sludge raking device may be supported in sliding fashion, in such a way to follow the drive of the front part of the beam. This makes it possible to smoothly make the alternating movement of the rear part of the beam of the sludge raking device even when a large volume of sludge is precipitated on the bed of the basin, reducing wear and power loss to the scraper.

Moreover, it is possible to swingably fit the rear beam provided with a scraper and shoe for raking sludge at the rear end of the beam connected to the driving device. This makes it possible to prevent uneven wear of the shoe mounted on the rear beam, because the shoe comes in contact with the bed of the basin evenly and the load is applied uniformly on the shoe.

Moreover, the fitted portion of the beam and rear beam may be covered with a boot. This makes it possible to prevent the penetration of sand, etc. into the fitted portion of the beam and rear beam, thus reducing wear.

Moreover, the beam may be formed in a hollow state to obtain buoyancy. This makes it possible to reduce wear by reducing the sliding resistance produced when the scraper moves in contact with the bed of the basin, and reduces power loss, thanks to the buoyancy of the beam.

Moreover, a buoyant material may be disposed on the beam. This makes it possible to secure buoyancy, even if a hole is produced in the hollow beam because of, for example, corrosion, etc., and reduces wear by reducing the sliding resistance produced when the scraper moves in contact with the bed of the basin, and reduces power loss.

Moreover, the driving device may be constructed with a guide rail provided with a pin rack and formed in an elliptical shape, a pin wheel engaged with the pin rack and moving circularly along the guide rail, and a motor driving the pin hole. This makes it possible to construct the sludge raker in such a way that, when it moves forward in the sludge raking direction, by means of a simple driving device, the scraper mounted on the beam of the sludge raking device moves along the bed of the basin and, when the sludge raker moves in the opposite direction, at least the scraper mounted on the front part of the beam of the sludge raking device moves without coming in contact with the bed of the basin.

Moreover, the front end of the beam may be connected to a pin wheel moving circularly along the guide rail of the driving device. This makes it possible to construct the sludge raker in such a way that, when it moves forward in the sludge raking direction, the scraper mounted on the beam of the sludge raking device moves along the bed of the basin and, when the sludge raker moves in the opposite direction, the scraper mounted on the front part of the beam of the sludge raking device moves without coming in contact with the bed of the basin.

Moreover, the front end and rear end of the beam may be connected to a pin wheel moving circularly along the guide rail of the respective driving devices. This makes it possible to construct the sludge raker in such a way that, when it moves forward in the sludge raking direction, the scraper mounted on the beam of the sludge raking device moves along the bed of the basin and, when the sludge raker moves in the opposite direction, the scraper mounted on the front part of the beam of the sludge raking device moves without coming in contact with the bed of the basin, and prevents the sludge from returning backwards, by making the scraper move on the sludge precipitated on the bed of the basin.

Moreover, it is possible to dispose a motor on the respective driving devices, and connect the motors to one common inverter. This makes it possible to easily synchronize the pin rack driving device connected between the front and rear end of the beam, and constantly maintain the beam in a horizontal position, thus raking the sedimentary sludge more efficiently and accurately.

Moreover, the driving device may be realized in a way that it stops at a reference point in each cycle and restarts based on that reference point. This makes it possible to rectify the phase shift of the pin rack driving device connected between the front and rear end of the beam, and synchronize the pin rack driving device more accurately.

Moreover, it is possible to dispose scrapers on the beam of the sludge raking device, at intervals of equal length to or shorter than the stroke of the alternating motion of the driving device. This makes it possible to rake sedimentary sludge accurately, by simply making the beam of the sludge raking device move forward and backward along the bed of the sewage treating basin.

Moreover, it is possible to form the front face of the scraper as a nearly vertical surface and the back face as a slope. This makes it possible for the sludge raker to rake sludge when it moves forward in the sludge raking direction and dive into the sedimentary sludge when retreating in the opposite direction, with a scraper of simple structure, and thus rake sedimentary sludge accurately and stably.

Moreover, it is possible to form the scraper in the shape of a convex triangle on the rear side with an inclination on the rear top face larger than the inclination at the bottom face. This makes it possible for the sludge raker to rake sludge when it moves forward in the sludge raking direction and dive into the sedimentary sludge when retreating in the opposite direction, with a scraper of simple structure, and thus rake sedimentary sludge accurately and stably.

Moreover, it is possible to construct the driving device in such a way that the sludge raking device moves at low speed when it moves forward in the sludge raking direction and at high speed when retreating in the opposite direction. This makes it possible to not only scrape sedimentary sludge accurately and stably by means of a scraper mounted on the beam of the sludge raking device but also make the scraper dive into the sedimentary sludge accurately.

Moreover, scraper for raking scum may be disposed in a way to make it work in linkage with the scum raking device. This makes it possible to rake scum floating on the surface of the water accurately and stably.

Moreover, it is possible to drive the scum gap once in a plurality of times of alternating movement of the scum raking device. This makes it possible to reduce the volume of waste water discharged together with scum and simplify the treatment of waste water.

### BRIEF DESCRIPTION OF THE DRAWINGS

Fig. 1 indicates the main part of an embodiment of the sludge raker according to the present invention, (A) being a front elevation, and (B) a side view.
Fig. 2 is an explanatory drawing of actions of the present invention, and is a front elevation showing the state of retreating of the sludge raker.
Fig. 3 is a side view indicating the relation between guide rail and pin hole.
Fig. 4 is a front elevation of guide rail.
Fig. 5 indicates a beam provided with scraper, (A) being a plan view, (B) a front elevation, (C) a sectional view, and (D) a sectional view showing the state in which a buoyancy material is disposed.
Fig. 6 indicates scraper, (A) being an explanatory drawing of the scraper in the preferred embodiment of the present invention, and (B) an explanatory drawing of the scraper in a reference example.
Fig. 7 indicates the full shape of a sewage treating basin to which is applied the sludge raker of the present invention, (A) being a plan view, and (B) a side view.
Fig. 8 indicates the main part of a modified embodiment of the sludge raker according to the present invention, (A) being a front elevation, and (B) a side view.
Fig. 9 is an expanded view of the rear beam of the sludge raker.
Fig. 10 is an expanded rear view of the fitting shaft.
Fig. 11 is an explanatory drawing showing the driving operation of the sludge raker.
Fig. 12 indicates a flow chart of sludge raking motion of the sludge raker.
Fig. 13 indicates an example of scum raking device, (A) being a plan view, and (B) a side view.
Fig. 14 indicates a modified example of scum raking device, (A) being a plan view, and (B) a side view.
Fig. 15 indicates a another modified example of scum raking device, (A) being a plan view, and (B) a side view.
Fig. 16 indicates a still another modified example of scum raking device, (A) being a plan view, and (B) a side view.
Fig. 17 indicates a conventional sludge raker, (A) being a plan view, and (B) a front elevation.

### DETAILED DESCRIPTION OF THE INVENTION

An embodiment of the sludge raker according to the present invention will be explained below based on drawings.

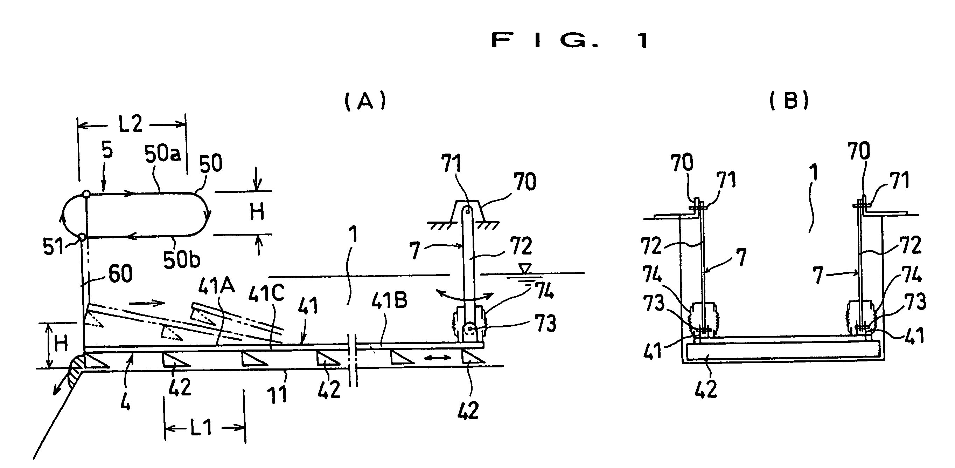

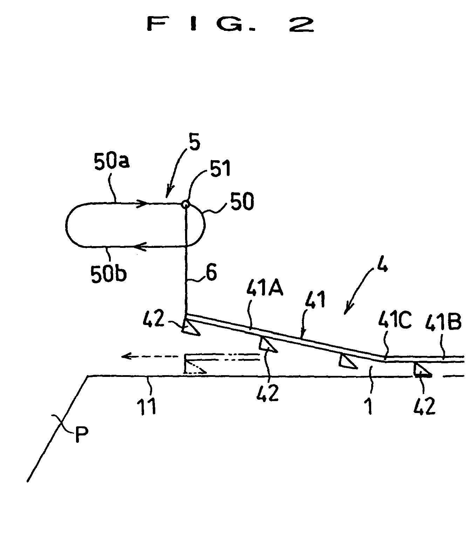

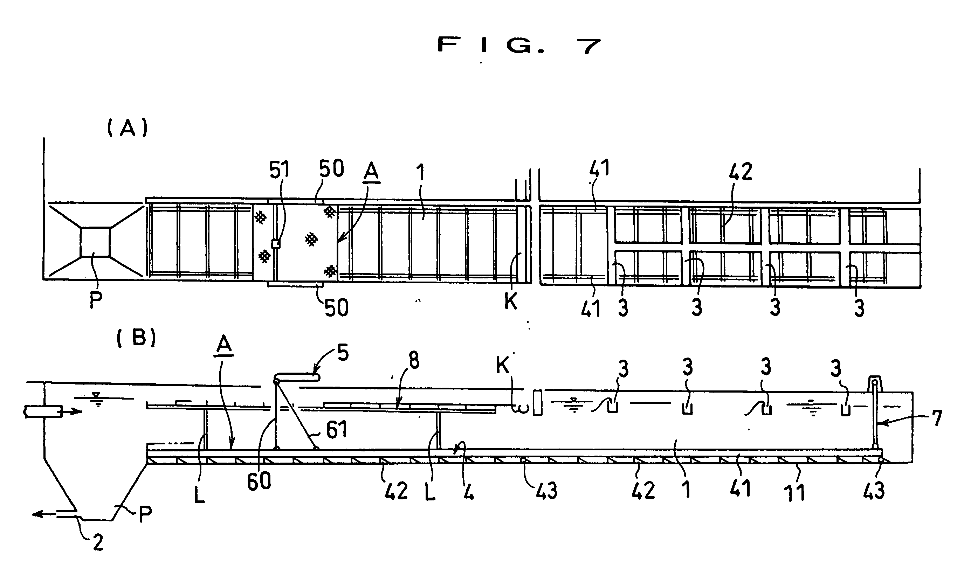

Fig. 1 to Fig. 7 indicate a sludge raker according to the present invention installed in a sewage treating basin 1 such as sludge sedimentation basin, sand basin, etc.

In the sewage treating basin 1 is introduced sewage from one end, and at the bed on this sewage feed side is provided a sludge pit P having a sludge drawing pipe 2.

The bed 11 of this sewage treating basin 1 is formed preferably with a slope lower on the sludge pit P side, so that the sludge may flow into the sludge pit P easily.

Moreover, in the sewage treating basin 1 is provided a scum gap K at a position where the scum content contained in the sewage introduced into the sewage treating basin 1 is separated to float, on the surface of the water near about the center of the sewage treating basin 1, for example, to discharge the scum floating on the surface of the water, and on the surface of the water in the rear part of the scum gap K are disposed a plurality of outlet gutters 3 to precipitate and separate the sludge and discharge the sewage after removal of scum to outside the sewage treating basin 1, as system construction.

Furthermore, in the sewage treating basin 1 is disposed a sludge raker A for raking the sludge precipitated at the bed of the basin 11 and collecting it into the sludge pit P.

This sludge raker A is composed of a sludge raking device 4 for raking the sludge precipitated at the bed of the basin 11 of the sewage treating basin 1, and a driving device 5 installed on the surface of the water for suspending and making this sludge raking device 4 move forward and backward in the longitudinal direction of the sewage treating basin 1 at prescribed stroke L2.

Still more, at the top of the sludge raking device 4 may be integrally disposed as required, a scum raking device 8 for raking the scum floating on the water surface into the scum gap K.

The sludge raking device 4 is constructed by disposing, on the basin bed 11 of the sewage treating basin 1 or over about the entire length in the longitudinal direction of the basin bed 11 excluding the sludge pit P and the stroke length L2, 2 beams 41, 41 in parallel at both ends in the direction of breadth of the basin bed 11, and installing a large number of scrapers 42 at prescribed intervals in a way across these 2 beams 41, 41.

The beam 41 of this sludge raking device 4 has its front part 41A flexibly disposed, through a bending part 41C, against the rear part 41B, and is constructed in a way to move by keeping a small gap against the basin bed 11, a gap of 10mm or so to be concrete, when the scrapers 42 in the front part 41A move forward in the sludge raking direction, and is lifted by a height H from the basin bed 11 and moves by keeping a certain distance from the basin bed 11 not to rake back the unraked sedimentary sludge in the backward direction, when the scrapers 42 retreat in the opposite direction.

In that case, the bending part 41C may adopt any optional bending structure such as pin joint structure, flexible structure, etc.

The system may also be constructed in such a way that, the scrapers 42 in the front part 41A move in contact with the basin bed 11 when they move forward in the sludge raking direction.

And, to enable the scrapers 42 in the front part 41A of the sludge raking device 4 to make the above described behaviour, the front part 41A of the sludge raking device 4 is suspended and supported through suspension rods 60, 61 disposed in the shape of an inverted V from the driving device 5.

On the other hand, the suspending device 7 suspending and supporting the rear part 41B of the sludge raking device 4 swingably supports the beam 41, through an axis 73, to the lower end of the suspension rod 72 which is swingably fit to an axis 71 mounted on a bracket 70, etc. on the surface of the water above the rear part 41B of the beams 41, to thereby enable the scrapers 42 in the rear part 41B of the sludge raking device 4 to move with a small gap, a gap of 10mm or so to be concrete, against the basin bed 11, in the same way as for the front part 41A.

In that case, the fittig portion containing the axis 73 dipped in the sewage (also including the fitting portion of the suspension rods 60, 61 disposed in the shape of an inverted V from the driving device 5, though not illustrated) shall preferably be covered with a cover 74 consisting of an elastic body such as rubber, etc.

This makes it possible to ensure smoothness and accuracy of operation by preventing penetration of dust, etc. to the fitting portion, wear and corrosion of fitting portion due to sewage or sludge.

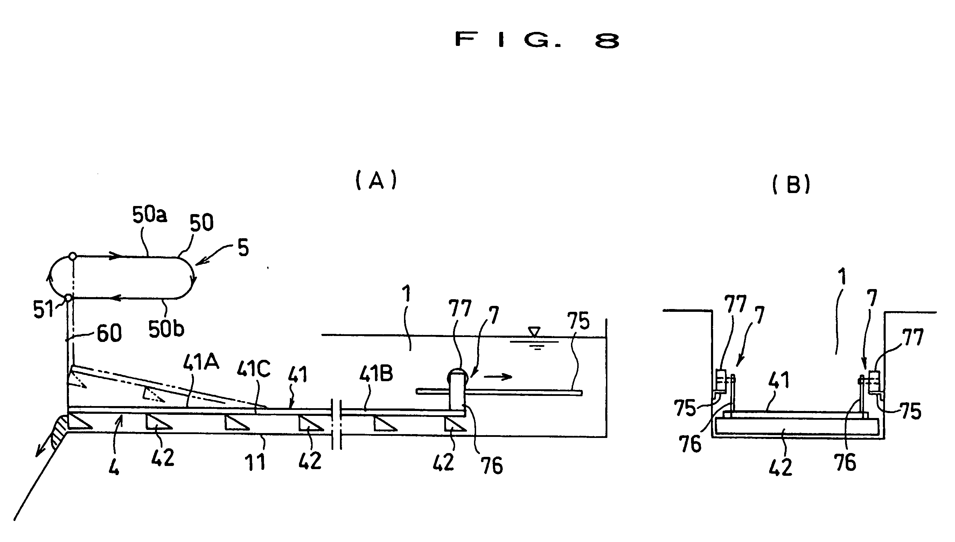

The suspending device 7 of the rear part 41B may adopt a sliding support system as shown in the modified example in Fig. 8, in addition to the swinging support system indicated in the present embodiment.

This suspending device 7 has a guide rail 75 slightly longer than the stroke length L2 of the driving device 5, at the position in the water or on the surface of the water at the top of the rear end of the beam 41, about in parallel to the beam 41, so as to support, with this guide rail 75, a roller 77 rotatably mounted on a suspension rod 76 suspending and supporting the rear portion 41B of the beam 41, to thereby enable the scrapers 42 in the rear part 41B of the sludge raking device 4 to move with a small gap, a gap of 10mm or so to be concrete, against the basin bed 11, in the same way as for the front part 41A.

This makes it possible to rake a greater volume of sedimentary sludge with the sludge raking device 4, make the alternating movement of the front part 41A of the beam 41 of sludge raking device 4 on which accumulates a large volume of sludge smoothly, and perform the raking of sedimentary sludge to the sludge pit side accurately and stably and with reduced power loss.

The scrapers 42 are installed, between the 2 beams 41, 41, in parallel at about equal intervals, at prescribed interval L1 preferably equal to or shorter than the stroke length L2, and at least the scrapers 42 disposed in the rear part 41B of the sludge raking device 4 are constructed to be different in shape on the front face and the back face or, to be more concrete, in about vertical face on the front face and sloped face on the back face, and with a bottom face formed in the shape of a sectional right-angled triangle along the basin bed 11, so that they rake the sludge when they move forward in the sludge raking direction i.e. toward the sludge pit P, and dive into the sedimentary sludge when they retreat in the opposite direction.

In the present embodiment, the scrapers 42 disposed in the front part 41A of the sludge raking device 4 are also formed in the shape of a sectional right-angled triangle, in the same way as the scrapers 42 disposed in the rear part 41B of the sludge raking device 4.

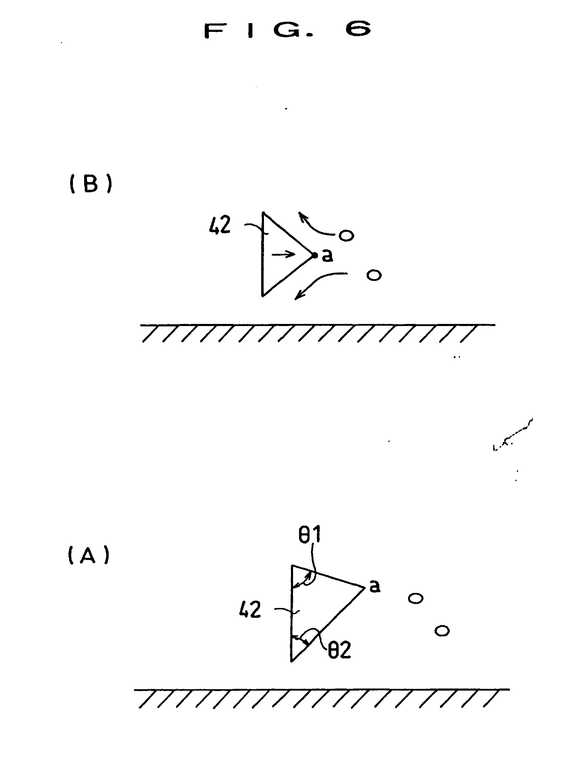

In addition, the scrapers 42 may also be formed in the shape of a sectional triangle convex on the rear side, in which the relation between the slope θ 1 on the rear top face and the angle of inclination θ 2 on the bottom face of the scrapers 42 is scrapers θ 1 > θ 2 as shown in Fig. 6 (A). This positions the vertex a of the scrapers 42 formed in the shape of a sectional triangle convex on the rear side higher than that of the scrapers 42 formed in a sectional triangle convex on the rear side at θ 1 = θ 2 indicated in Fig. 6 (B), and makes it possible to prevent the sledge under precipitation or sedimentary sludge from being scraped up by the scrapers 42, at the time of retreat of the beam 41, and thus rake the sludge more efficiently and accurately.

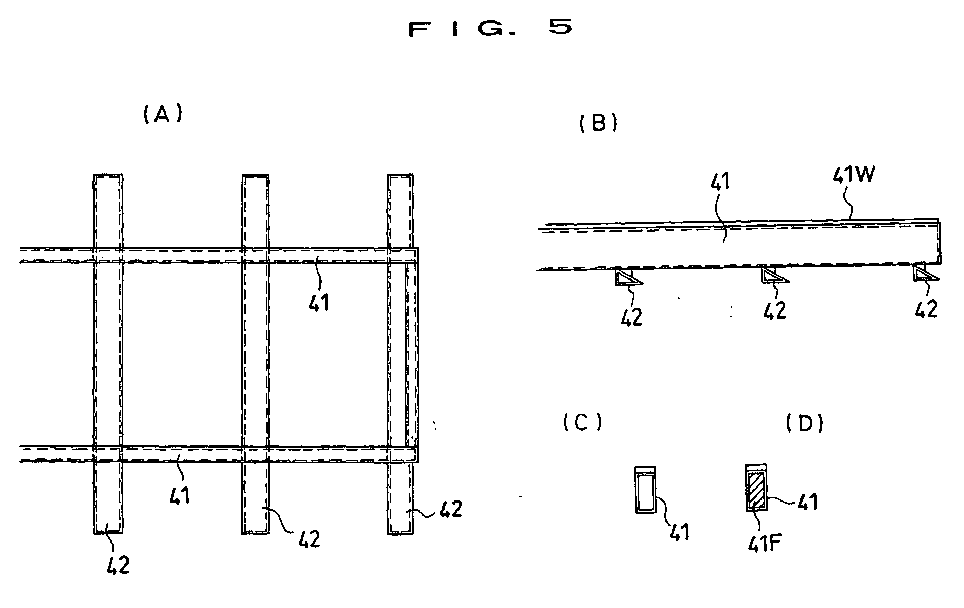

Moreover, to reduce the weight in water of the beam 41, it is also possible to either make the inside of the beam 41 hollow and seal it or fill in a foamed buoyancy material 41F in it to provide it with buoyancy, as shown in Fig. 5.

The scrapers 42 may also be constructed in the same way.

Furthermore, the scrapers 42 are either fixed to the beams 41, 41 or supported to be somewhat swingably against the beams 41, 41. By constructing the scrapers 42 in a way to be supported somewhat swingably against the beams 41, 41, it becomes possible to make the bottom face of the scrapers 42 move along the basin bed 11, when moving forward so as to rake sedimentary sludge accurately and stably, make the scrapers 42 dive into the sedimentary sludge accurately, at the time of a retreat.

Still more, it is preferable to dispose a shoe or roller 43 at proper position of either the beams 41, 41 or the scrapers 42, so that the beams 41, 41 on which are installed the scrapers 42 may make alternating movements smoothly along the bed 11 of the sewage treating basin 1.

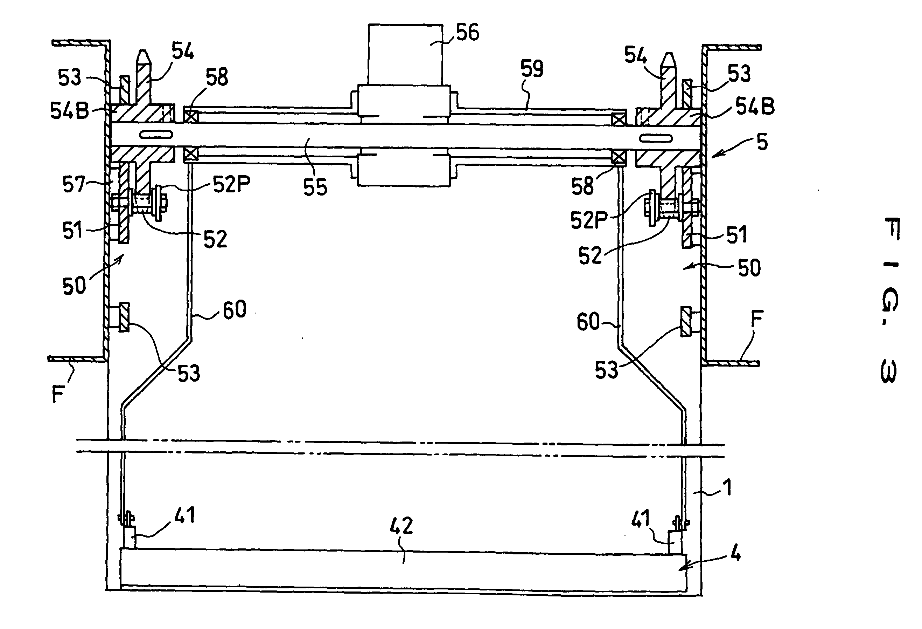

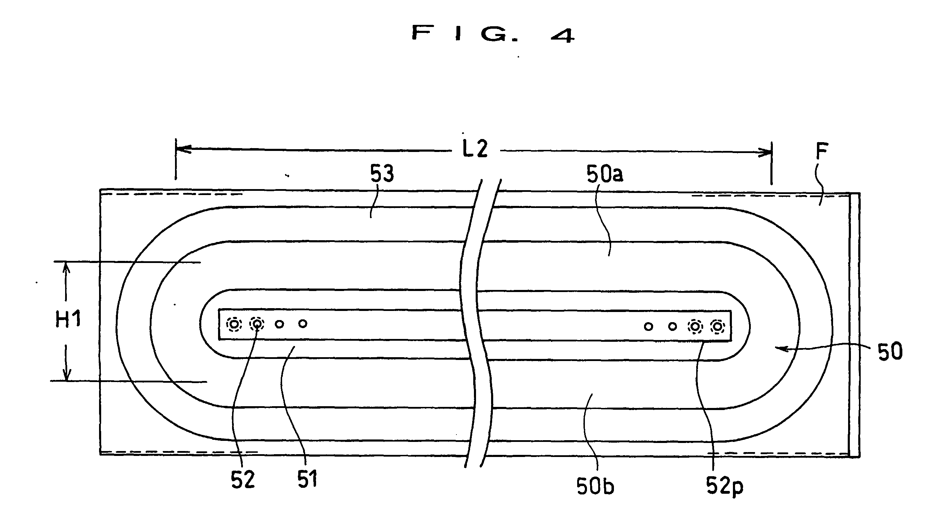

The driving device 5, mounted on the front side from the central part of the sewage treating basin 1, namely on the body frame F installed on the surface of the water on the sludge pit P side, through a mounting base 57, is composed of guide rail 50, comprising inner guide rail 51 disposed about in horizontal position, a large number of pin racks 52 disposed in projection at equal intervals around this inner guide rail 51 and outer guide rail 53 disposed in a way to surround the circumference of the inner guide rail 51, pin wheel 54 engaged with those pin racks 52 and moving circumferentially (about rectangular movement) along the guide rail 50 under the guidance of the inner guide rail 51 and the outer guide rail 53, and motor 56 mounted on the shaft 55 of the pin wheel 54, as shown in Fig. 3 and 4.

The pin racks 52 are solidly fastened by means of a pin rack mounting plate 52P disposed on their tip side.

In this way, between the inner guide rail 51 and the outer guide rail 53 is formed the guide rail 50 in an elliptical shape to be inserted in the boss 54B of the pin wheel 54 to support it.

And, the both ends of the guide rail 50 are formed in an elliptical shape to facilitate circular movement of the pin wheel 54, and the gap H between the upper guide rail 50a and the lower guide rail 50b of the guide rail 50 is set in such a way that the scrapers 42 in the front part 41A of the sludge raking device 4 move in contact with the basin bed 11, when they move forward in the sludge raking direction, and move by keeping a certain distance from the basin bed 11, when they retreat in the opposite direction.

Yet more, in the guide rails 50, 50 installed face to face with each other in the direction of breadth of the sewage treating basin 1 are inserted and supported the pin wheels 54, 54 respectively, and between the bosses 54B, 54B of the pin wheels 54, 54 is placed a shaft 55 in a way to integrate them with bridging, and this shaft 55 is supported, through a bearing 58, by a pipe-shaped driving frame 59, and on this driving frame 59 is installed a motor 56 or a motor with reduction gear, for example, to make the pin wheels 54, 54 engaged in the pin rack 52 rotate, through the shaft 55, by driving this motor 56, so that the pin wheels 54, 54 circumferentially move along the guide rail 50 to make the sludge raking device 4 move forward and backward, through the shaft 55 and the driving frame 59.

In that case, the driving device 5 is preferably constructed in such a way that the sludge raking device 4 moves at low speed when it moves forward in the sludge raking direction and at high speed when retreating in the opposite direction, namely moves at a speed of about 0.5 m/min when moving forward and at a speed of about 1.5m/min when moving forward, in the case where the object of raking is sludge of sewage, for example, to thereby make it possible to not only scrape sedimentary sludge accurately and stably by means of scrapers 42 mounted on the beam 41 of the sludge raking device 4 but also make the scrapers 42 dive into the sedimentary sludge accurately.

This speed control, which is not particularly limitative, may be performed by detecting the position of the pin wheel 54 of the driving device 5 and the load of the motor 56 and, based on this detection, control the number of revolutions of the motor 56 to prescribed value.

Explanation will be given hereafter on the actions of this sludge raker.

The sewage flowing into the sewage treating basin 1 is subject to gravity separation, when it flows down in the downstream direction, and the sludge content precipitates. At that time, elements of large specific gravity precipitate fast and, therefore, the sludge precipitates on the basin bed 11 from the upstream side to the downstream side of the sewage treating basin sequentially from elements of larger specific gravity to smaller ones.

On the other hand, the scum content floats on the surface of the water, and the sewage deprived of sludge and scum is discharged through the outlet gutters 3.

The sludge raking device 4 raking and collecting the sludge precipitated on the basin bed 11 toward the sludge pit P is driven by the driving device 5. This driving of sludge raking device 4 may be made either continuously or intermittently according to the amount of sediment, and may be performed selectively as required depending on the amount of inflow of sewage, amount of precipitation of sludge, etc.

Next, the driving method sludge raking device 4 will be explained.

Driven by the motor 56, the driver 51 circumferentially moves under the guidance of the guide rail 50 in the shape of a flat loop.

On this driver 51 is suspended and supported, through the suspension rods 60, 61, the sludge raking device 4 i.e. the front part 41A of the beam 41 provided with scrapers 42, while the rear part 41B of the beam is suspended and supported by the suspension rod 7. Therefore, the beam 41 of the sludge raking device 4 moves by the stroke length L2 in the longitudinal direction of the sewage treating basin 1, according to the moving distance of the driver.

And, by setting this stroke length L2 in the longitudinal direction of the sludge raking device 4 preferably at a value either equal to or longer than the distance L1 at which the scrapers 42 are disposed, it becomes possible to rake the sludge precipitated on the basin bed 11 toward the sludge pit P side for collection.

In that case, when the driver 51 engaged with the pin rack 52 and moving circularly moves to the downstream direction of the sewage processing basin 1 on the guide rail 50a, the rods 60, 61 are lifted by a distance H1 between the upper guide rail 50a and the lower guide rail 50b, as compared with the time when it moves to the upstream direction of the sewage processing basin 1, and the tip side of the beam 41 is lifted from the basin bed 11 and the scrapers 42 retreat and, as a result, the sludge precipitated on the basin bed 11 is not raked to the downstream direction and does not move in the opposite direction.

Moreover, by disposing the front part 41A of the beam 41 of the sludge raking device 4 swingably against the rear part 41B, through a bending part 41C, and by constructing the system in such a way that the scrapers 42 move by keeping a small gap against the basin bed 11, a gap of 10mm or so to be concrete, when they move forward in the sludge raking direction, by means of the driving device 5, and are lifted by a height H from the basin bed 11 and move by keeping a good distance from the basin bed 11 not to rake back the unraked sedimentary sludge in the backward direction, when they retreat in the opposite direction, it becomes possible to rake a greater volume of sedimentary sludge with the sludge raking device 4, make the alternating movement of the front part 41A of the beam 41 of sludge raking device 4 on which accumulates a large volume of sludge smoothly, and perform the raking of sedimentary sludge accurately and stably.

Furthermore, in combination with above, the rear part 41B of the beam 41 is swingably or slidably suspended and supported following the driving of the front part 41A, and the system is constructed in such a way that the scrapers 42 of the beam 41 make alternating movements with getting in contact with the basin bed 11 to rake the sludge, and this makes it possible to reduce the wear of the scrapers 42 and reduce the power loss as well.

Still more, the scrapers 42, disposed on the beam 41 of the sludge raking device 4 and constructed to be different in shape on the front face and the back face or, to be more concrete, in about vertical face on the front face and sloped face on the back face and with a bottom face formed in the shape of a sectional right-angled triangle along the basin bed 11, can move in a way to rake the sludge when they move forward in the sludge raking direction, and dive into the sedimentary sludge when they retreat in the opposite direction, and thus rake sedimentary sludge accurately and stably.

The sludge raker according to the present invention has so far been explained based on an embodiment. However, the present invention is not restricted to the construction described in the above-described embodiment, but may be changed in construction as required, within the range not deviated from its purpose, such as application of the constructions described hereafter, etc.

Moreover, the construction of the sludge raker according to the present invention can also be applied to sand raker dealing with sedimentary sand, in addition to that dealing with sludge, and does not exclude such application.

Explanation will be given hereafter on supplementary constructions applicable to the sludge raker according to the present invention.

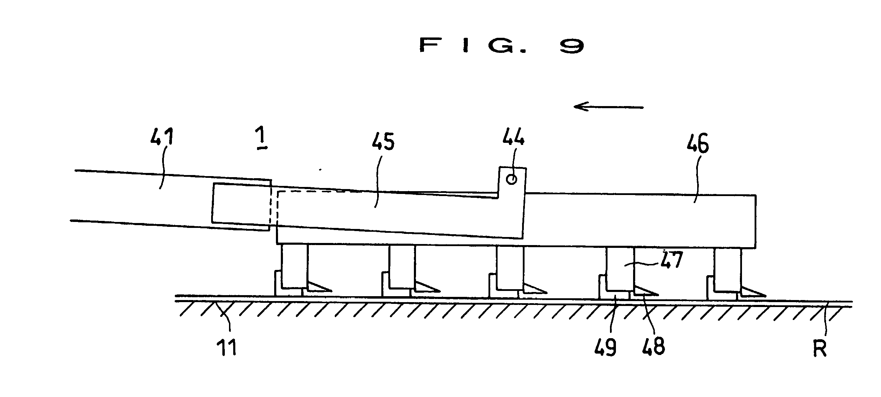

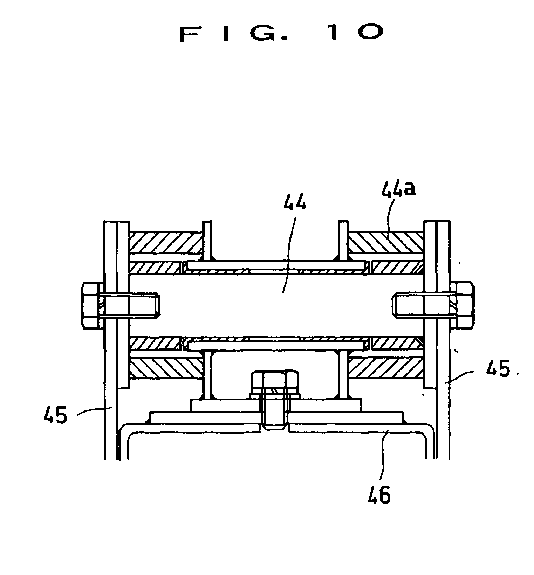

First, as shown in Fig. 9 and Fig. 10, the rear beam 46 provided with sludge raking scrapers 48 and shoes 49 may be swingably fit to the rear end of the beam 41 connected to the driving device 5.

In that case, the rear beam 46 is made swingable by means of the fitting shaft 44, so that it may move always in parallel or horizontally along the basin bed 11, regardless of the posture of the beam 41, to keep the shoes 49 mounted on the shoe mounting brackets 47 protruding from the bottom face of the rear beam 46 constantly in contact with the guide rail R, to thereby prevent uneven wear of the shoes 49.

At the fitting section of the beam 41 and the rear beam 46, the both ends of the fitting shaft 44 are fixed to the bracket 45, which is a backward extension of the beam 41, as shown in Fig. 10, and in this fitting shaft 44 is engaged and slidably supported the bearing protruding at the top in the intermediate part of the rear beam 46.

Moreover, to the outer circumference of this fitting shaft 44 is fit a boot 44a in rubber or synthetic resin, to cover the entire fitting shaft 44. This makes it possible to absorb deformation due to swinging of the beams 41, 46, as the beams 41, 46 are rubbed by the boot 44a with up-down movements of the front end of the beam 41, when they swing on the fitting shaft 44, and eliminate sliding part in the section directly in contact with sewage, to prevent penetration of sludge, etc. to the fitting shaft 44.

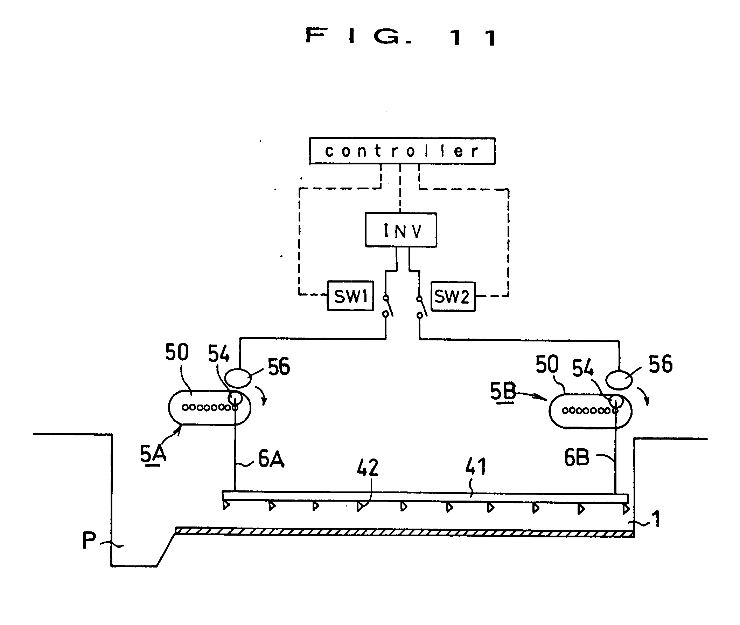

Furthermore, as shown in Fig. 11, it is possible to install driving devices 5A, 5B in positions above the front end and the rear end of the beam 41 of the sludge raking device 4, and connect, through suspension rods 6A, 6B, the front end and the rear end of the beam 41 to the pin wheel 54 circumferentially moving along the guide rail 50 of the driving devices 5A, 5B.

This makes it possible to construct the system in such a way that the scrapers 42, disposed on the beam 41 of the sludge raking device 4, move along the basin bed 11 when they move forward in the sludge raking direction, and the scrapers 42 move by keeping a certain distance from the basin bed 11 when they retreat in the opposite direction, to make the scrapers 42 move on the sludge precipitated on the basin bed 11 and prevent the sludge from returning backward.

In this case, the motors 56 disposed on the driving devices 5A, 5B respectively are connected to one common inverter, so that the driving devices 5A, 5B, suspended and supported by the beam 41 by being connected to the front end and the rear end thereof, may be started at a time and driven in synchronization with each other at one same speed.

This makes it possible to easily synchronize the driving devices 5A, 5B, suspended and supported by the beam 41 by being connected to the front end and the rear end thereof, and rake sedimentary sludge more efficiently and accurately, as the beam 41 can be maintained constantly in horizontal position.

Still more, as slip, etc. is produced in the driving devices 5A, 5B, it is conceivable that the synchronization of the driving devices 5A, 5B, suspended and supported by the beam 41 by being connected to the front end and the rear end thereof, be disturbed.

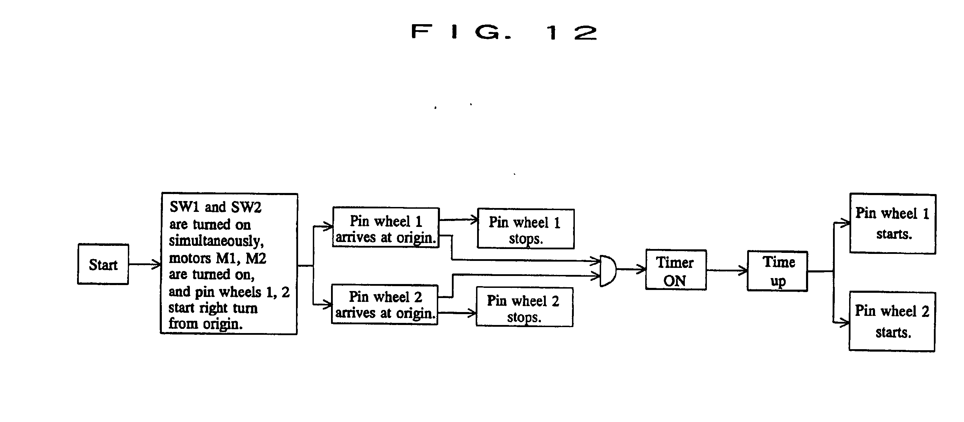

For that reason, by making the driving devices 5A, 5B stop at reference point (origin) in each cycle and restart after passage of a certain time by means of a timer, etc., as indicated in Fig. 12, it becomes possible to rectify any phase shift produced with disturbance of the synchronization of the driving devices 5A, 5B, suspended and supported by the beam 41 by being connected to the front end and the rear end thereof, and synchronize the driving devices 5A, 5B more accurately.

In the case where the timer value is set for 0, simply the driving device which arrived first stops for a short time, while the one which is behind can continue turning normally.

Yet more, the scum raking device 8, integrally mounted above the sludge raking device 4 for raking the scum floating on the surface of the water, is constructed by disposing 2 upper beams 81, 81 at the position of surface of the water in a way to be about in parallel to the surface of the water, and disposing a large number of scum raking plates 82, 82 between those upper beams 81, 81 at regular intervals.

The sludge raking device 4 and the scum raking device 8 are integrated to each other through a supporting rod L, suspended and supported by one same driving device 5 and arranged in a way to make alternating moves, so as to rake the sludge precipitated on the basin bed 11 toward the sludge pit P side with the sludge raking device 4 when this sludge raking device 4 moves forward and, on the other hand, rake the scum S floating on the surface of the water toward the scum gap K side with the scum raking device 8 when the sludge raking device 4 retreats in the opposite direction.

This driving of sludge raking device 4 and scum raking device 8 may be made continuously or intermittently, and can be performed selectively as required depending on the amount of inflow of sewage, amount of precipitation of sludge, etc.

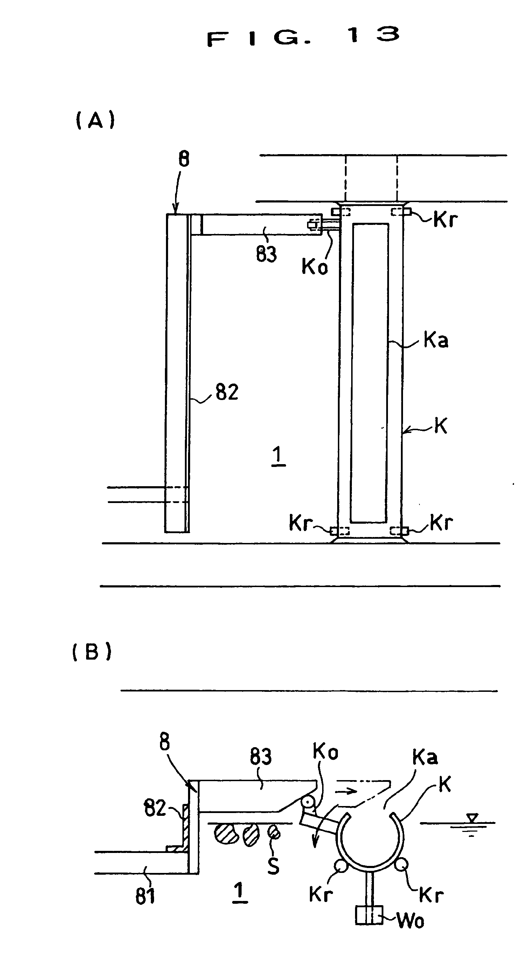

In that case, the scum raking device 8 is provided with a striker 83 at its rear end in a way to protrude in the rear direction, as shown in Fig. 13, and constitutes, with this striker 83, a scum gap driving device which mechanically drives the scam gap K for sucking the floating scum S, in complete synchronization with the driving of the scum raking device 8.

This scum gap driving device is constituted in a way to directly operate the scam gap K with the striker 83.

To be concrete, the scam gap K is constructed by supporting, through supporting rollers Kr, a cylindrical scam gap K having a scum suction port Ka opening on its outer circumference along the longitudinal direction, slidably to balance it with a balance weight Wo so that the scum suction port Ka may always come at the top, and by forming an operating piece Ko in a way to protrude at a part of the scam gap K, so that, when this operating piece Ko is pressed downward by the striker 83, the scam gap K turns in the direction of the arrow mark from the state indicated in Fig. 13 (B), to suck the scum S floating in the vicinity through the scum suction port Ka which is diagonally inclined at the position of the water surface.

It is desirable to form the bottom face at the tip of the striker 83 on a slope and provide a roller on the operating piece Ko side, so that the operating piece Ko may be pressed down accurately with a movement of the striker 83.

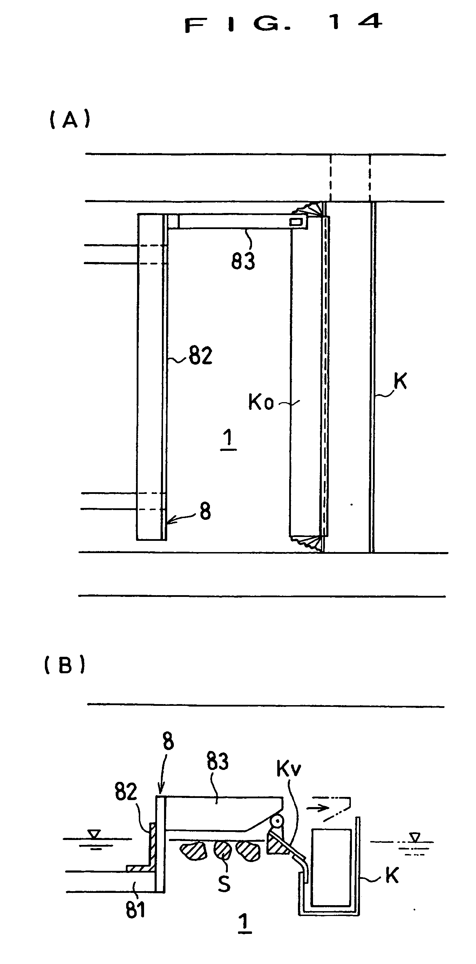

Moreover, the scum gap driving device B is constructed by forming the scum gap K in the shape of a box, as shown in Fig. 14, in such a way that the scum suction port Ka comes below the surface of the water on one side, and by disposing a flexible valve element Kv in a way to close this scum suction port Ka, so as to suck the scum S floating in the vicinity by swinging this valve element Kv in a way to press it down with a push of the striker 83 and open the scum suction port Ka.

Even in this case, it is desirable to form the bottom face at the tip of the striker 83 on a slope and provide a roller on the valve element Kv side, to make it possible to swing the valve element Kv in a way to press it down with a push of the striker 83.

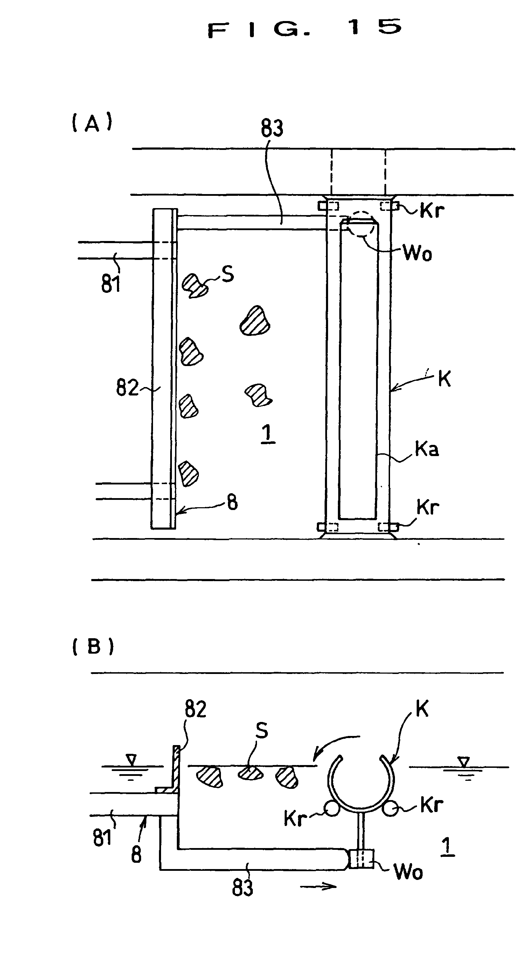

Furthermore, the scum gap driving device B is formed, as shown in Fig. 15, in a way to support, through supporting rollers Kr, a cylindrical scam gap K having a scum suction port Ka opening on its outer circumference along the longitudinal direction, slidably to balance it with a balance weight Wo so that the scum suction port Ka may always come at the top, and directly press the balance weight Wo downward with the tip of the striker 83 disposed facing the balance weight Wo in horizontal direction, and is constructed in such a way that the scam gap K turns in the direction of the arrow mark in the same way as in the first embodiment, to suck the scum S floating in the vicinity through the scum suction port Ka which is diagonally inclined at the position of the water surface.

The above embodiment is realized in a way to drive the scum gap K once every alternating movement of the scum raking device 8 to suck the scum into the scum gap K. In addition to above, it may also be realized in a way to reduce the volume of waste water discharged together with the scum, by driving the scum gap K once in a plural number of times of alternating movement of the scum raking device 8 depending on the volume of production of scum, etc. for example, or, to be concrete, when the volume of production of scum is small.

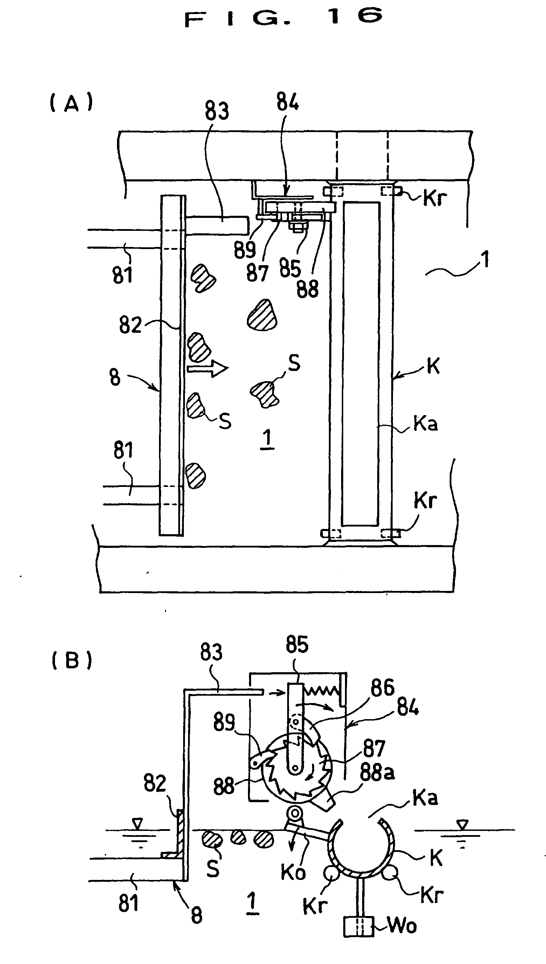

To be concrete, as shown in Fig. 16, the scum gap driving device B is constructed in a way to support, through supporting rollers Kr, a cylindrical scam gap K having a scum suction port Ka opening on its outer circumference along the longitudinal direction, slidably to balance it with a balance weight Wo, form an operating piece Ko in a way to protrude at a part of the scam gap K, dispose a driving mechanism 84 between this operating piece Ko and the striker 83, so that the scam gap K makes a swing when the scam raking device 8 has made alternating movement in a predetermined number of times.

This drive mechanism 84, drive mechanism provided with a ratchet mechanism to be more concrete, is constructed by comprising a ratchet claw 86 on the lever 85 disposed under the urging force of a spring swinging with the forward pushing pressure of the striker 83, supporting a ratchet wheel 87 and a turntable 88 provided on its outer circumference with projection 88a on the spindle of the lever 86 concentrically and in such a way that the ratchet wheel 87 and turntable 88 turn in unison, and fastening a ratchet claw 89 swingably supported on the fixed side, together with the ratchet claw 86, to this ratchet wheel 87, to thereby enable the ratchet wheel 87 to turn by a single tooth, at each forward push of the striker 83.

Still more, while the number of times of driving of the scum gap K is determined by the number of teeth of this ratchet wheel 87 and the number of projections 88a provided on the outer circumference of the turntable 88, it is so arranged that, when the scum raking device 8 made alternating movement in the predetermined number of times, namely at each prescribed cycle, it pushes the operating piece Ko in a way to press it down with the projection 88a, to make the scum gap K supported by the supporting roller Kr turn in the direction of the arrow mark and to suck the scum S floating in the vicinity through the scum suction port Ka which is diagonally inclined at the position of the water surface.

When the pushing down force on the operating piece Ko by the projection 88a is released, the scum gap K automatically returns to a state having the scum suction port Ka at the top face, under the action of the balance weight Wo.

## Claims

1. A sludge raker (A) comprising a sludge raking device (4) which in use is disposed along the bed of a sewage treatment basin, said sludge raking device (4) being adapted to move forward in a sludge raking direction and rearward in a direction opposite to said sludge raking direction, a driving device (5) from which the sludge raking device (4) is suspended, said driving device (5) being adapted to move said sludge raking device (4) in said forward and rearward directions, **characterised in that** said sludge raking device (4) comprises a beam (41) having a forwardly disposed front part (41A) and a rear part (41B) in relation to the sludge raking direction and carries a number of scrapers (42), at least one of which in use moves along the bed of the basin when the sludge raking device moves forward and at least one of the scrapers mounted on the rear part (41B) of the beam does not contact the bed of the basin when the sludge raking device moves rearwards, at least the scrapers mounted on the rear part (41B) of the beam have forward and rear facing surfaces that are different in shape, whereby, in use, the scrapers (42) mounted on the rear part (41B) rake sludge when moving in the forward direction and dive into the sludge when moving in the rearward direction, the driving device (5) being installed above the level of sewage in the basin.

2. A sludge raker as defined in claim 1, wherein the scraper (42) mounted on the front part(41A) of the beam of the sludge raking device (4) in use moves in contact with the bed (11) of the basin when it moves forward in the sludge raking direction.

3. A sludge raker as defined in claim 1, wherein the scraper (42) mounted on the front part (41A) of the beam of the sludge raking device (4) in use moves without coming in contact with the bed (11) of the basin when it moves forward in the sludge raking direction.

4. A sludge raker as defined in any one of claims 1 to 3, wherein the rear part (41B) of the beam of the sludge raking device is suspended in a swingable manner and supported in such a way as to follow the drive of the front part (41A) of the beam.

5. A sludge raker as defined in any one of claims 1 to 3 wherein the rear part (41B) of the beam of the sludge raking device is supported in a slidable manner in such a way as to follow the drive of the front part (41 A) of the beam.

6. A sludge raker as defined in any one of claims 1 to 5, wherein the rear beam (41B) is provided with a scraper (42) and shoe for raking sludge is swingably mounted to the rear end (41B) of the beam connected to the driving device (5).

7. A sludge raker as defined in claim 6, wherein the joint between a suspending device (7) and the rear beam (41B) is covered with a boot (74).

8. A sludge raker as defined in any one of claims 1 to 7, wherein the beam (41) are formed in a hollow state to aid buoyancy.

9. A sludge raker as defined in any one of claims 1 to 8, wherein a buoyancy material is disposed on the beam (41).

10. A sludge raker as defined in any one of claims 1 to 9, wherein the driving device (5) is constructed with a guide rail (50) provided with a pin rack (52) and formed in an elliptical shape, a pin wheel (54) engaged with the pin rack (52) and moving in a cycle along the guide rail (50), and a motor (56) driving the pin wheel (54).

11. A sludge raker as defined in claim 10, wherein the front end of the beam (41) is connected to the pin wheel (54) moving in a cycle along the guide rail (50) of the driving device (5).

12. A sludge raker as defined in claim 10, wherein the front and rear end of the beam (41) are connected to a pin wheel (54) moving along the guide rail (50) of the driving device (5).

13. A sludge raker as defined in claim 12, wherein a motor (56) is disposed on the respective driving devices (5A, 5B), and the motors (56) are connected to a common inverter (INV).

14. A sludge raker as defined in claim 12 or 13, wherein the driving device (5) is realized in such a way to stop at a reference point in each cycle and restart based on that reference point.

15. A sludge raker as defined in any one of claims 1 to 14, wherein the scrapers (42) are disposed on the beam (41) of the sludge raking device at intervals of equal to or shorter length than the stroke (L2) of alternating motion of the driving device (5).

16. A sludge raker as defined in any one of claims 1 to 15, wherein the front face of the scraper (42) is formed as a nearly vertical surface and the rear face as a slope.

17. A sludge raker as defined in any one of claims 1 to 16, wherein the scraper (42) is formed in the shape of a convex triangle on the rear side with an inclination (01) on the rear top face larger than the inclination (02) at the bottom face.

18. A sludge raker as defined in any one of claims 1 to 17, wherein the driving device (5) moves the sludge raking device at low speed in the sludge raking direction and at high speed in the opposite direction.

19. A sludge raker as defined in any one of claims 1 to 18, wherein a scraper for raking scum is provided to work in linkage with a scum raking device (8).

20. A sludge raker as defined in any one of claims 1 to 19, wherein a scum gap (K) is driven once in plurality of times of alternating movement of a scum raking device (8).

## Patentansprüche

1. Schlammräumer (A), der Folgendes aufweist: eine Schlammräumvorrichtung (4), die im Gebrauch entlang dem Bett eines Abwasseraufbereitungsbeckens angeordnet ist, wobei die Schlammräumvorrichtung (4) so ausgebildet ist, dass sie sich in einer Schlammräumrichtung vorwärts und in einer zu der Schlammräumrichtung entgegengesetzten Richtung rückwärts bewegt, eine Antriebseinrichtung (5), an der die Schlammräumvorrichtung (4) aufgehängt ist, wobei die Antriebseinrichtung (5) so ausgebildet ist, dass sie die Schlammräumvorrichtung (4) in der Vorwärts- und der Rückwärtsrichtung bewegt, **dadurch gekennzeichnet, dass** die Schlammräumvorrichtung (4) einen Träger (41) aufweist, der einen in Bezug auf die Schlammräumrichtung in Vorwärtsrichtung angeordneten vorderen Teil (41A) und einen hinteren Teil (41B) hat und eine Anzahl von Schabelementen (42) trägt, von denen sich im Gebrauch mindestens eines entlang dem Bett des Beckens bewegt, wenn sich die Schlammräumvorrichtung vorwärts bewegt, wobei mindestens eines der Schabelemente, das an dem hinteren Teil (41B) des Trägers angebracht ist, das Bett des Beckens nicht kontaktiert, wenn sich die Schlammräumvorrichtung rückwärts bewegt, dass mindestens die an dem hinteren Teil (41B) des Trägers angebrachten Schabelemente nach vorn und nach hinten gerichtete Oberflächen haben, die von unterschiedlicher Gestalt sind, so dass die an dem hinteren Teil (41B) angebrachten Schabelemente im Gebrauch Schlamm räumen, wenn sie sich in Vorwärtsrichtung bewegen, und in den Schlamm eintauchen, wenn sie sich in Rückwärtsrichtung bewegen, wobei die Antriebseinrichtung (5) über dem Niveau des Abwassers in dem Becken installiert ist.

2. Schlammräumer nach Anspruch 1, wobei das an dem vorderen Teil (41A) des Trägers der Schlammräumvorrichtung (4) angebrachte Schabelement (42) sich im Gebrauch in Kontakt mit dem Bett (11) des Beckens bewegt, wenn es sich in der Schlammräumrichtung vorwärts bewegt.

3. Schlammräumer nach Anspruch 1, wobei sich das an dem vorderen Teil (41A) des Trägers der Schlammräumvorrichtung (4) angebrachte Schabelement (42) im Gebrauch bewegt, ohne mit dem Bett (11) des Beckens in Kontakt zu gelangen, wenn es sich in der Schlammräumrichtung vorwärts bewegt.

4. Schlammräumer nach einem der Ansprüche 1 bis 3, wobei der hintere Teil (41B) des Trägers der Schlammräumvorrichtung schwenkbar aufgehängt und derart abgestützt ist, dass er dem Vortrieb des vorderen Teils (41A) des Trägers folgt.

5. Schlammräumer nach einem der Ansprüche 1 bis 3, wobei der hintere Teil (41B) des Trägers der Schlammräumvorrichtung gleitbar derart abgestützt ist, dass er dem Vortrieb des vorderen Teils (41A) des Trägers folgt.

6. Schlammräumer nach einem der Ansprüche 1 bis 5, wobei der hintere Träger (41B) mit einem Schabelement (42) versehen ist und ein Gleitsegment zum Räumen von Schlamm an dem hinteren Ende (41B) des mit der Antriebseinrichtung (5) verbundenen Trägers schwenkbar angebracht ist.

7. Schlammräumer nach Anspruch 6, wobei die Verbindungsstelle zwischen einer Aufhängeeinrichtung (7) und dem hinteren Träger (41B) mit einer Haube (74) abgedeckt ist.

8. Schlammräumer nach einem der Ansprüche 1 bis 7, wobei der Träger (41) hohl ausgebildet ist, um den Auftrieb zu unterstützen.

9. Schlammräumer nach einem der Ansprüche 1 bis 8, wobei Auftriebsmaterial an dem Träger (41) angebracht ist.

10. Schlammräumer nach einem der Ansprüche 1 bis 9, wobei die Antriebseinrichtung (5) mit einer Führungsschiene (50) ausgebildet ist, die mit einer Stiftstange (52) versehen ist und Ellipsengestalt hat, die versehen ist mit einem Stiftrad (54), das mit der Stiftstange (52) in Eingriff ist und sich in einem Takt entlang der Führungsschiene (50) bewegt, und mit einem Motor (56), der das Stiftrad (54) antreibt.

11. Schlammräumer nach Anspruch 10, wobei das Vorderende des Trägers (41) mit dem Stiftrad (54) verbunden ist, das sich in einem Takt entlang der Führungsschiene (50) der Antriebseinrichtung (5) bewegt.

12. Schlammräumer nach Anspruch 10, wobei das Vorder- und das Hinterende des Trägers (41) mit einem Stiftrad (54) verbunden sind, das sich entlang der Führungsschiene (50) der Antriebseinrichtung (5) bewegt.

13. Schlammräumer nach Anspruch 12, wobei ein Motor (56) an den jeweiligen Antriebseinrichtungen (5A, 5B) angeordnet ist und die Motoren (56) mit einem gemeinsamen Wechselrichter (INV) verbunden sind.

14. Schlammräumer nach Anspruch 12 oder 13, wobei die Antriebseinrichtung (5) derart realisiert ist, dass sie an einem Referenzpunkt in jedem Zyklus anhält und auf der Basis dieses Referenzpunkts erneut startet.

15. Schlammräumer nach einem der Ansprüche 1 bis 14, wobei die Schabelemente (42) an dem Träger (41) der Schlammräumvorrichtung in Abständen gleicher oder kürzerer Länge als dem Hub (L2) der alternierenden Bewegung der Antriebseinrichtung (5) angeordnet sind.

16. Schlammräumer nach einem der Ansprüche 1 bis 15, wobei die vordere Seite des Schabelements (42) als eine nahezu vertikale Oberfläche und die hintere Seite als eine Schräge ausgebildet ist.

17. Schlammräumer nach einem der Ansprüche 1 bis 16, wobei das Schabelement (42) in Gestalt eines konvexen Dreiecks an der Rückseite ausgebildet ist, wobei eine Neigung (θ1) an der hinteren oberen Seite größer als die Neigung (θ2) an der unteren Seite ist.

18. Schlammräumer nach einem der Ansprüche 1 bis 17, wobei die Antriebseinrichtung (5) die Schlammräumvorrichtung mit niedriger Geschwindigkeit in der Schlammräumrichtung und mit hoher Geschwindigkeit in der entgegengesetzten Richtung bewegt.

19. Schlammräumer nach einem der Ansprüche 1 bis 18, wobei ein Schabelement zum Räumen einer Schwimmschicht vorgesehen ist, um in Koppelung mit einer Schwimmschichträumvorrichtung (8) zu wirken.

20. Schlammräumer nach einem der Ansprüche 1 bis 19, wobei ein Schwimmschicht-Maul (K) einmal in einer Vielzahl von Malen von alternierenden Bewegungen einer Schwimmschichträumvorrichtung (8) angetrieben wird.

## Revendications

1. Racleur de boue (A) comprenant un dispositif de raclage de boue (4) qui, en utilisation, est disposé le long du fond d'un bassin de traitement d'eaux usées, ledit dispositif racleur de boue (4) étant adapté pour se déplacer vers l'avant dans une direction de raclage de la boue et vers l'arrière, dans la direction opposée à ladite direction de raclage de la boue, un dispositif d'entraînement (5) auquel le dispositif de raclage de boue (4) est suspendu, ledit dispositif d'entraînement (5) étant adapté pour déplacer ledit dispositif de raclage de boue (4) dans les directions vers l'avant et vers l'arrière, **caractérisé en ce que** ledit dispositif de raclage de boue (4) comprend une poutre (41) ayant une partie avant (41A) disposée en avant et une partie arrière (41B), relativement à ladite direction de raclage de boue, et comprend un certain nombre de raclettes (42) dont, en utilisation, au moins une se déplace le long du fond du bassin lorsque le dispositif de raclage de boue se déplace vers l'avant, et au moins l'une des raclettes montée sur la partie arrière (41B) de la poutre n'entre pas en contact avec le fond du bassin lorsque le dispositif de raclage de boue se déplace vers l'arrière, au moins les raclettes montées sur la partie arrière (41B) de la poutre ont des surfaces dirigées vers l'avant et vers l'arrière qui sont différentes par leur forme, de sorte que, en utilisation, les raclettes (42) montées sur la partie arrière (41B) raclent la boue lorsqu'elles se déplacent dans la direction vers l'avant et plongent dans la boue lorsqu'elles se déplacent dans la direction vers l'arrière, le dispositif d'entraînement (5) étant installé au-dessus du niveau des eaux usées dans le bassin.

2. Racleur de boue selon la revendication 1, dans lequel, en utilisation, la raclette (42) montée sur la partie avant (41 A) de la poutre du dispositif de raclage de boue (4) se déplace en contact avec le fond (11) du bassin lorsqu'elle se déplace vers l'avant dans la direction de raclage de la boue.

3. Racleur de boue selon la revendication 1, dans lequel, en utilisation, la raclette (42) montée sur la partie avant (41A) de la poutre du dispositif de raclage de boue (4) se déplace sans entrer en contact avec le fond (11) du bassin lorsqu'elle se déplace vers l'avant dans la direction de raclage de boue.

4. Racleur de boue selon une quelconque des revendications 1 à 3, dans lequel la partie arrière (41B) de la poutre du dispositif de raclage de boue est suspendue de façon oscillante et est supportée de manière à suivre l'entraînement de la partie avant (41 A) de la poutre.

5. Racleur de boue selon une quelconque des revendications 1 à 3, dans lequel la partie arrière (41 B) de la poutre du dispositif de raclage de boue est supportée d'une façon coulissante de manière à suivre l'entraînement de la partie avant (41 A) de la poutre.

6. Racleur de boue selon une quelconque des revendications 1 à 5, dans lequel la poutre arrière (41B) est munie d'une raclette (42) et un patin destiné à racler la boue est monté oscillant sur la partie arrière (41B) de la poutre reliée au dispositif d'entraînement (5).

7. Racleur de boue selon la revendication 6, dans lequel le joint entre le dispositif de suspension (7) et la poutre arrière (41B) est recouvert d'une hotte (74).

8. Racleur de boue selon une quelconque des revendications 1 à 8, dans lequel la poutre (41) est de forme creuse pour assister la flottaison.

9. Racleur de boue selon une quelconque des revendications 1 à 8, dans lequel la matière de flottaison est montée sur la poutre (41).

10. Racleur de boue selon une quelconque des revendications 1 à 9, dans lequel le dispositif d'entraînement (5) comprend dans sa construction un rail de guidage (50) muni d'une crémaillère à chevilles (52) et présentant une forme elliptique, et une roue à chevilles (54) en prise avec la crémaillère à chevilles (52) et qui se déplace en un cycle le long du rail de guidage (50), et un moteur (56) qui entraîne la roue à chevilles (54).

11. Racleur de boue selon la revendication 10, dans lequel l'extrémité avant de la poutre (41) est reliée à la roue à chevilles (54) qui se déplace en un cycle le long du rail de guidage (50) du dispositif d'entraînement (5).

12. Racleur de boue selon la revendication 10, dans lequel l'extrémité avant et l'extrémité arrière de la poutre (41) sont reliées à une roue à chevilles (54) qui se déplace le long du rail de guidage (50) du dispositif d'entraînement (5).

13. Racleur de boue selon la revendication 12, dans lequel un moteur (56) est monté sur les dispositifs d'entraînement respectifs (5A, 5B) et les moteurs (56) sont connectés à un onduleur commun (INV).

14. Racleur de boue selon la revendication 12 ou 13, dans lequel le dispositif d'entraînement (5) est réalisé de manière à s'arrêter à un point de référence dans chaque cycle et à redémarrer en se basant sur ce point de référence.

15. Racleur de boue selon une quelconque des revendications 1 à 14, dans lequel les raclettes (42) sont disposées sur la poutre (41) du dispositif de raclage de boue à des intervalles d'une longueur égale ou inférieure à la course (L2) du mouvement alternatif du dispositif d'entraînement (5).

16. Racleur de boue selon une quelconque des revendications 1 à 15, dans lequel la face avant de la raclette (42) forme une surface à peu près verticale et la face arrière forme une pente.

17. Racleur de boue selon une quelconque des revendications 1 à 16 , dans lequel la raclette (42) a la forme d'un triangle convexe sur le côté arrière, avec une inclinaison (01) sur la face arrière supérieure plus grande que l'inclinaison (02) au niveau de la face inférieure.

18. Racleur de boue selon une quelconque des revendications 1 à 17, dans lequel le dispositif d'entraînement (5) entraîne le dispositif de raclage de boue à basse vitesse dans la direction de raclage de la boue et à grande vitesse dans la direction opposée.

19. Racleur de boue selon une quelconque des revendications 1 à 18, dans lequel une raclette destinée à racler l'écume est prévu pour travailler en liaison avec un dispositif de raclage d'écume (8).

20. Racleur de boue selon une quelconque des revendications 1 à 19, dans lequel une coupure d'écume (K) est entraîné une fois sur plusieurs mouvements alternatifs du dispositif de raclage d'écume (8).
